# EUROPÄISCHE PATENTSCHRIFT

(11) **EP 1 131 605 B1**
(45) Veröffentlichungstag und Bekanntmachung des Hinweises auf die Patenterteilung: **16.08.2006**
(21) Anmeldenummer: 99955758.0
(22) Anmeldetag: 22.09.1999
(51) Int. Cl.: G01D 5/14, G01D 5/16, G01B 7/30, G01D 3/02

(54) **MESSVORRICHTUNG ZUR BERÜHRUNGLOSEN ERFASSUNG EINES DREHWINKELS**
MEASURING DEVICE FOR THE CONTACTLESS MEASUREMENT OF AN ANGLE OF ROTATION
DISPOSITIF DE MESURE SANS CONTACT D'UN ANGLE DE ROTATION

(30) Priorität: 17.11.1998 DE 19852916
(43) Veröffentlichungstag der Anmeldung: 12.09.2001
(73) Patentinhaber: ROBERT BOSCH GMBH, 70442 Stuttgart (DE)
(72) Erfinder: REICHL, Asta, D-70499 Stuttgart (DE); KLOTZBUECHER, Thomas, D-70635 Rudersberg (DE)
(86) Internationale Anmeldenummer: PCT/DE1999/003025
(87) Internationale Veröffentlichungsnummer: WO 2000/029814

(56) Entgegenhaltungen:
- EP-A- 0 611 951
- EP-A- 0 979 388
- WO-A-99/30113

## Beschreibung

### Stand der Technik

Die Erfindung geht aus von einer Messvorrichtung zur berührungslosen Erfassung eines Drehwinkels nach der Gattung des Anspruchs 1. Aus der DE-OS 196 34 381.3 ist ein Sensor bekannt, der in drei Ebenen übereinander angeordnet ist. Der Rotor bildet die mittlere Ebene, wobei er aus der Trägerplatte für einen Permanentmagneten besteht. Die Trägerplatte selbst besteht aus magnetisch nicht leitendem Material, so dass der Magnetfluss über die beiden anderen Ebenen, d.h. den Stator verläuft und mit Hilfe zweier Distanzstücke, die zwischen den beiden Ebenen des Stators angeordnet sind, gesteuert wird. Die Welle bzw. der Fortsatz einer Welle, die am Rotor befestigt ist, hat keinen Einfluss auf den Magnetfluss. Mit diesem Sensor ist zwar ein relativ großer Winkelbereich ohne Vorzeichenwechsel messbar, er baut aber in Achsrichtung gesehen durch den Aufbau in drei parallelen Ebenen relativ groß.

Die EP-A-0 611 951 offenbart eine Messvorrichtung zur berührungslosen Erfassung eines Drehwinkels. Die Vorrichtung besteht aus einem Rotor mit Magnet und einem davon getrennten zweisegmentigen Stator. Zwischen den beiden Statorsegmenten befindet sich ein Hall-Element.

Die EP-A-0 979 388 beschreibt ebenfalls eine Messvorrichtung zur berührungslosen Erfassung eines Drehwinkels und gilt als Stand der Technik gemäß Artikel 54(3)EPÜ.

### Vorteile der Erfindung

Die erfindungsgemäße Messvorrichtung zur berührungslosen Erfassung eines Drehwinkels mit den kennzeichnenden Merkmalen des Anspruchs 1 hat demgegenüber den Vorteil, dass der Sensor in Achsrichtung eine relativ kleine Größe aufweist. Er baut nur noch in zwei Ebenen. Die Trägerplatte des Permanentmagneten, die den Rotor darstellt, dient zugleich auch zur Führung des magnetischen Flusses. Ferner ist die Welle bzw. Achse auf der der Rotor sitzt, in die Führung des magnetischen Flusses mit einbezogen, wodurch sich zusätzliche magnetische Flußleitstücke erübrigen. Ferner wird durch diesen Aufbau die Anzahl der Teile und der damit verbundene Montageaufwand verringert.

Der Sensor ist aufgrund seines einfachen Aufbaus mit relativ geringem Montageaufwand in verschiedenen Systemen, wie zum Beispiel einer Drosselmeßvorrichtung, eines Pedalmoduls für einen Gaspedalwertgeber integrierbar oder als eigenständiger Sensor bei Drosselklappengebern oder einer Karosserieeinfederungsvorrichtung verwendbar.

Durch die in den abhängigen Ansprüchen aufgeführten Maßnahmen sind vorteilhafte Weiterbildungen und Verbesserungen der im Anspruch 1 angegebenen Meßvorrichtung möglich.

### Zeichnung

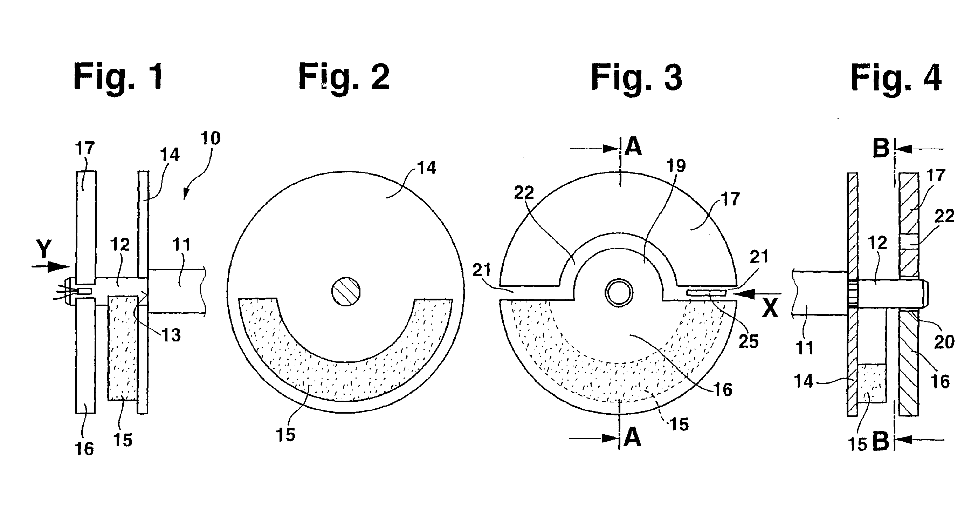

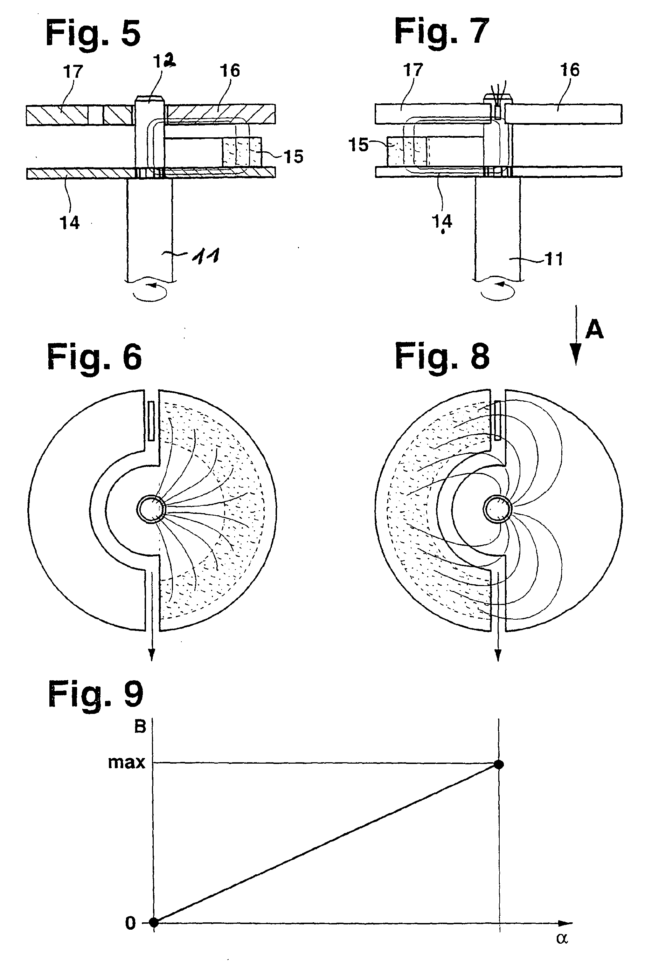

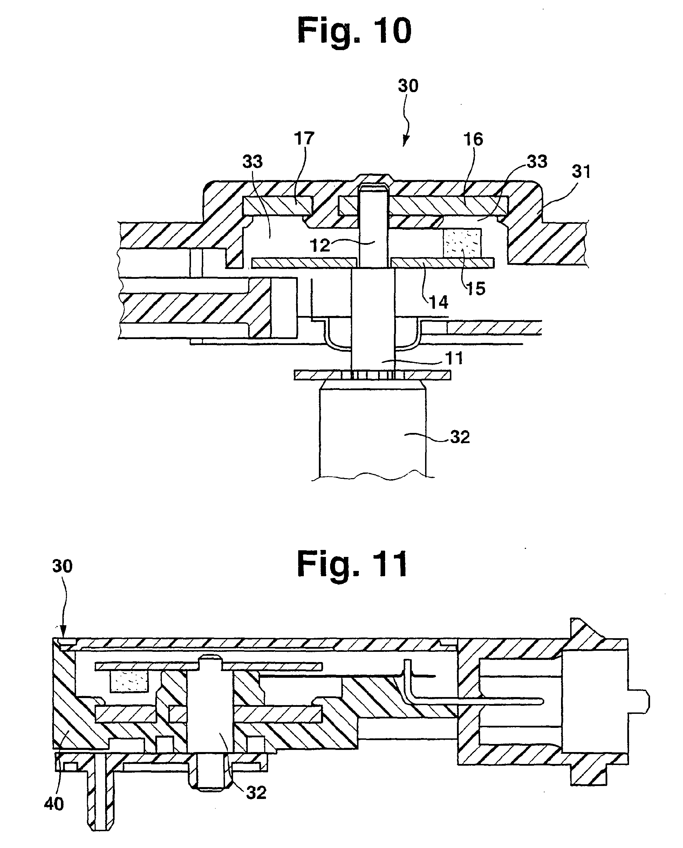

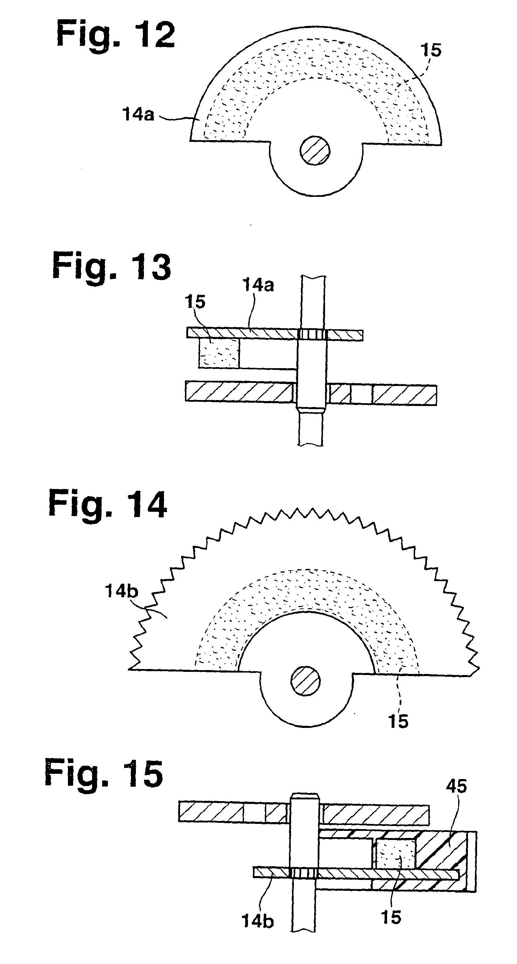

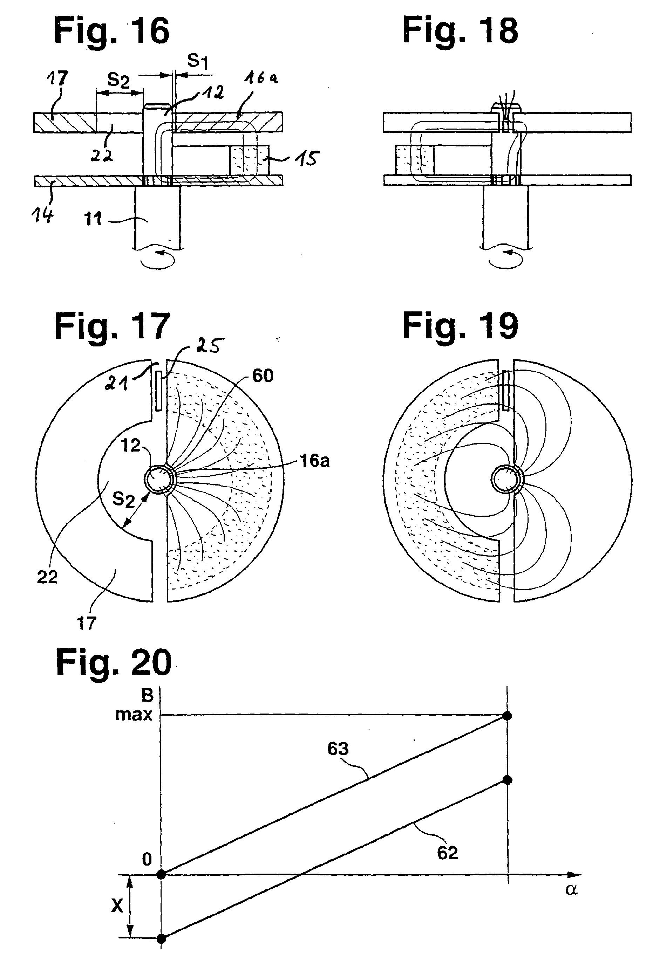

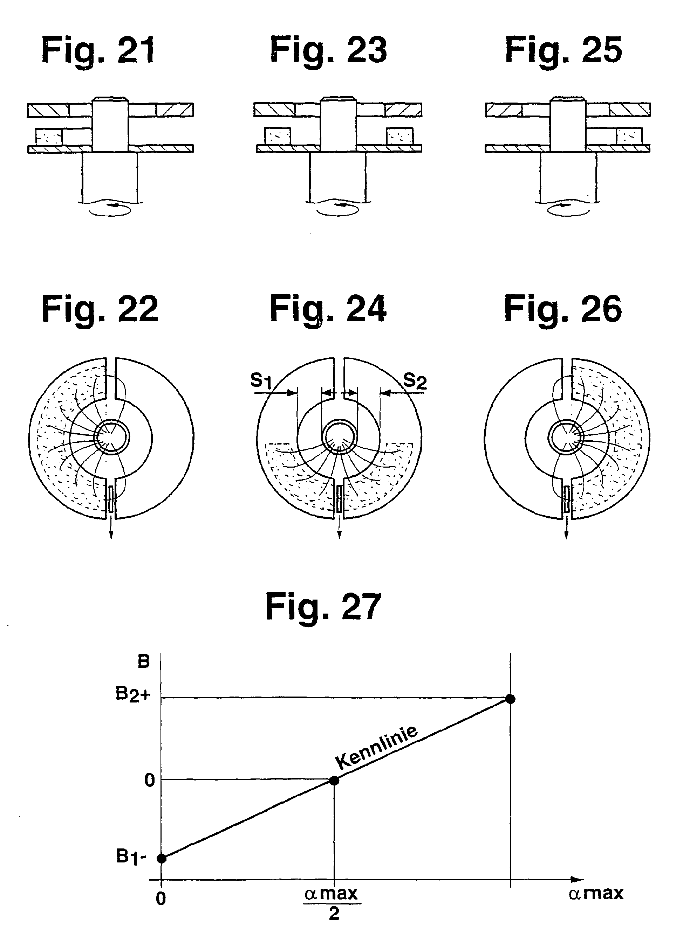

Verschiedene Beispiele und Ausführungsbeispiele der Erfindung sind in der Zeichnung dargestellt und in der nachfolgenden Beschreibung näher erläutert. Die Figuren 1 bis 4 zeigen verschiedene Ansichten bzw. Schnitte durch ein erstes Beispiel. Figur 1 zeigt hierbei einen Längsschnitt in Blickrichtung X nach Figur 3, Figur 2 einen Schnitt B-B nach Figur 4, Figur 3 eine Draufsicht in Blickrichtung Y nach Figur 1 und Figur 4 einen Längsschnitt in Richtung A-A nach Figur 3. Die Figuren 5 und 6 zeigen den Magnetfluß bei einer Winkeldrehung von 0° bzw. einer Induktion B = 0, die Figuren 7 und 8 zeigen den entsprechenden Magnetfluß bei maximaler Winkeldrehung bzw. bei einer Induktion B = max, die Figur 9 zeigt den entsprechenden Verlauf der Induktion B über den Drehwinkel α. Weitere Beispiele, die den Einbau des Sensors in einen Drosselklappensteller bzw. einen Pedalwertgeber darstellen, sind als Längsschnitt in der Figur 10 und 11 dargestellt. Weitere Beispiele zeigen die Figuren 12 und 14 in Draufsicht bzw. die Figuren 13 und 15 in einem Längsschnitt. In den Figuren 16 bis 27 ist ein Ausführungsbeispiel dargestellt, bei dem der Offset durch eine konstruktive Ausgestaltung verschoben werden kann. Hiervon zeigen die Figuren 21 bis 27 die Ausbildung und den magnetischen Fluß bei gleicher Spaltenbreite.

### Beschreibung

In den Figuren 1 bis 4 ist mit 10 ein Sensor bezeichnet, der mit Hilfe einer Achse 11, mit einem nicht dargestellten Bauteil verbunden ist, dessen Drehbewegung bestimmt werden soll. An der Stirnseite der Achse 11 ist ein Fortsatz 12 angebracht, so daß eine Schulter 13 entsteht, auf der eine Trägerplatte 14 mittig aufgesetzt ist, die gleichzeitig als Rotor dient. Die Achse 11, der Fortsatz 12 und die Trägerplatte 14 können sowohl als Einzelbauteile als auch als ein einziges Bauteil hergestellt sein. Auf der Trägerplatte 14 ist möglichst mit großem radialen Abstand vom Mittelpunkt, d.h. vom Ansatzpunkt der Achse 11, ein ringförmiger Permanentmagnet 15 angeordnet. Je größer hierbei der Abstand ist, desto besser ist die Auflösung des Meßsignals. Der Permanentmagnet 15 kann als Kreisausschnitt (Kreissegment) oder Teil eines Kreisrings ausgeführt sein. Sein Winkelbereich ist mindestens so groß, wie der zu bestimmende maximale Drehwinkel des zu überwachenden bzw. des zu messenden Bauteils. Wie aus den Darstellungen in der Figur 2 bzw. 3 zu ersehen ist, beträgt der Winkelbereich des Permanentmagneten 15 bei diesem Beispiel 180°, so daß ein zu messender Drehwinkel von 180° erreicht werden kann. Der Permanentmagnet 15 ist ferner in Achsrichtung, d.h. senkrecht zur Trägerplatte 14 polarisiert. Die Trägerplatte 14 besteht aus magnetisch leitendem, insbesondere weichmagnetischem Material. Die Achse 11 und der Fortsatz 12 oder zumindest der Fortsatz 12 besteht auch aus magnetisch leitendem, insbesondere weichmagnetischem Material.

In einer zweiten Ebene über dem Permanentmagneten 15 ist parallel zur Trägerplatte 14 mit einem geringen Abstand ein Stator angeordnet, der aus zwei Segmenten 16, 17 besteht. Das Segment 16 umschließt dabei mit einem Bogen 19 den Fortsatz 12. In diesem Beispiel ist der Bogen 19 als Kreisbogen ausgebildet. Es ist aber auch eine andere Kontur denkbar. Wesentlich dabei ist aber, daß eine magnetisch leitende Verbindung zwischen dem Fortsatz 12 und dem Segment 16 möglich ist. Der Spalt 20 zwischen der Achse 11 und dem Bogen 19 ist deshalb möglichst gering auszubilden. Zwischen den beiden Segmenten 16, 17 ist ein durchgehender Spalt ausgebildet, der beim Beispiel nach den Figuren 1 bis 4 zwei gleich ausgebildete äußere Abschnitte 21 und einen mittigen, im Bereich des Bogens 19 befindlichen Distanzspalt 22 aufweist. Beim Distanzspalt 22 ist es wichtig, daß zwischen den Segmenten 16 und 17, d.h. bei diesem Beispiel im Bereich des Bogens 19, möglichst kein magnetischer Fluß der vom Permanentmagneten 15 erzeugten Magnetfeldlinien möglich ist. Der Distanzspalt 22 kann deshalb mit Luft oder einem anderen magnetisch nichtleitendem Material ausgefüllt sein. Ist der Distanzspalt 22 mit Luft gefüllt, so muß er im Verhältnis zum Spalt 21 größer ausgebildet sein, um diesen obengenannten Effekt zu erreichen. Statt Luft kann auch ein anderes, magnetisch nichtleitendes Material ausgewählt werden. Im Spalt 21 ist etwa mittig ein magnetfeldempfindliches Element 25, wie z.B. Feldplatte, Magnettransistor, Spulen, magnetoresistives Element oder ein Hall-Element angeordnet. Wichtig hierbei ist, daß das magnetfeldempfindliche Bauteil eine möglichst lineare Abhängigkeit seines Ausgangssignals von der magnetischen Induktion B aufweist. In den Figuren 1 bis 4 ist jeweils eine Messung mit Hilfe eines einzigen magnetfeldempfindlichen Elements 25, eines Hall-Elements dargestellt. In diesem Fall muß das Element 25 möglichst mittig im Spalt 21 angeordnet sein. Hingegen wäre es auch möglich, z.B. jeweils ein Element 25 in beiden Spalten 21 anzuordnen, um z.B. eine sogenannte redundante Messung (Sicherheitsmessung) durchführen zu können. Auch wäre es denkbar, in einem Spalt zwei Elemente anzuordnen. Wird, wie in der Figur 3 ersichtlich, nur in einem Spalt 21 ein magnetfeldempfindliches Element 25 angeordnet, so kann der gegenüberliegende Spalt 21 auch die Größe des Distanzspalts 22 aufweisen und somit die dem Distanzspalt 22 innehabende magnetisch nichtleitende Funktion aufweisen. Selbstverständlich ist es auch möglich, den als Meßspalt dienenden Spalt 21 nicht, wie in der Figur 3 dargestellt, symmetrisch sondern auch unsymmetrisch oder auch abgewinkelt anzuordnen. Wichtig ist dabei, daß der Spalt 21 relativ gering im Verhältnis zum Distanzspalt 22 ausgebildet ist, um einen möglichst ungestörten Fluß der Magnetlinien durch das magnetfeldempfindliche Element 25 zu ermöglichen.

In der Figur 9 ist der Verlauf der Kennlinie der magnetischen Induktion B im Element 25 z.B. einem Hall-Element über dem Drehwinkel α der Achse 11 dargestellt. Es ist erkennbar, daß bei einem Drehwinkel α von 0° die Induktion B ebenfalls Null beträgt, während sie beim maximalen Drehwinkel α auch den maximalen Induktionswert erreicht. Bei diesem Beispiel ist der maximale Drehwinkel bei 180° erreicht. Die Stellung des Sensors 10 bei einem Drehwinkel von 0° ist in den Figuren 5 und 6 dargestellt. Es ist ersichtlich, daß der Magnetfluß vom Permanentmagneten 15 über den geringen Spalt, der zur Beweglichkeit des Rotors gegenüber dem Stator dient, zum Segment 16, von dort über den geringen Lagerungsspalt zum Fortsatz 12 und von dort über die Trägerplatte 14 zurück zum Permanentmagneten 15 führt. Wie insbesondere aus der Figur 6 ersichtlich ist, ist der Magnetfluß so gesteuert, daß er bei einem Drehwinkel von 0° nicht durch das Element 25 verläuft, so daß im Element 25 keine magnetische Induktion B erfolgen kann. Wird nun die Achse 11 und somit die Trägerplatte 14 mit dem Permanentmagneten 15 gedreht, so wird der durch das Element 25 verlaufende magnetische Fluß vergrößert, und es ergibt sich die in der Figur 9 dargestellte lineare Meßlinie. Die Einstellung bei maximalem Drehwinkel α ist in der Figur 7 bzw. 8 dargestellt. Die Figur 7 ist eine Ansicht in Blickrichtung A auf die Figur 8. In der Stellung des maximalen Drehwinkels α verläuft der gesamte Magnetfluß des Permanentmagneten 15 über den geringen Spalt in das Segment 17. Von dort fließt der Magnetfluß durch den einen Spalt 21 in das Segment 16 und ein auf der gegenüberliegenden Seite über den anderen Spalt 21 zurück durch den Lagerungsspalt in den Fortsatz 12 und von dort über die Trägerplatte 14 zum Permanentmagneten 15. Insbesondere aus der Figur 8 ist ersichtlich, daß beim Passieren des Spalts 21 nahezu der gesamte Magnetfluß durch das Element 25 geführt wird und dadurch im Element 25 eine maximal mögliche magnetische Induktion B bewirkt wird. Aus der Figur 8 ist ferner ersichtlich, daß durch den Distanzspalt 22 ein nahezu vollständiger Verlauf der Magnetlinien über den Spalt 21 und somit durch das Element 25 bewirkt wird. Es darf möglichst kein Magnetfluß über den Distanzspalt 22 erfolgen.

Im Beispiel nach der Figur 10 ist der Einbau des oben beschriebenen Sensors in eine Drosselklappenstelleinheit 30 dargestellt. Mit Hilfe dieser Einheit 30 wird der Drehwinkel einer Drosselklappe für eine Motorsteuerung erfaßt. Hierbei sind die Segmente 16, 17 des Stators direkt im Deckel 31 der Drosselklappenstelleinheit 30 angeordnet. Da der Deckel 31 aus Kunststoff besteht, können die Segmente 16, 17 in den Deckel 31 mit eingespritzt werden. Es wäre aber auch möglich, die beiden Segmente 16, 17 des Stators in den Deckel 31 einzuklipsen. Selbstverständlich muß dabei aber ein Spalt 33 vorhanden sein, der einen magnetischen Fluß vom Permanentmagneten 15 zu den Segmenten 16 bzw. 17 ermöglicht. In einem Spalt 33, der in der Figur 10 nicht ersichtlich ist, befinden sich wiederum das eine oder die beiden Elemente 25. Die Achse 11 ist hierbei direkt auf der Welle 32 der Drosselklappe befestigt oder stellt einen Fortsatz dieser Welle 32 dar. Die als Rotor dienende Trägerplatte 14 mit dem Permanentmagneten 15 ist somit direkt auf der Welle 32 der Drosselklappe befestigt. Ohne große Änderungen kann der Sensor nach den Figuren 1 bis 4 bzw. 12 bis 15 in eine Drosselklappenstelleinheit 30 eingebaut werden. Hierbei kann in einfacher Weise das z.B. bisher verwendete Potentiometer ausgetauscht werden. Die Figur 11 stellt einen Pedalwertgeber dar. In der Figur 11 sind die Segmente 16, 17 des Stators in den Boden 40 der Einheit 30 angeordnet. Die Segmente 16, 17 können auch hier wieder in den Boden 40 eingegossen oder eingeklipst werden. Der Fortsatz der Welle 32 ragt somit durch den Stator hindurch und die als Rotor dienende Trägerplatte 14 ist am Ende der Achse 32 befestigt. Somit ist entsprechend den Figuren 10 und 11 der Sensor entsprechend den Ausführungen der Figuren 1 bis 4 bzw. 12 bis 15 den baulichen Gegebenheiten der Drosselklappenstelleinheit 30 bzw. des Pedalwertgebers anpaßbar.

Beim Beispiel nach den Figuren 12 und 13 ist die Trägerplatte des Sensors keine Vollscheibe mehr. Es reicht aus, wenn die Trägerplatte 14a als Segment ausgebildet ist, das einen Winkelbereich entsprechend der Größe des Permanentmagneten 15 aufweist. In der Figur 12 ist bezogen auf die Figuren 1 bis 4 ein Permanentmagnet mit einem Winkelbereich von 180° dargestellt. Somit hat die Trägerplatte 14a auch einen Winkelbereich von etwa 180°. Die Außenkontur dieser als Segment ausgebildeten Trägerscheibe 14a kann beliebig ausgebildet sein. So ist z.B. in den Figuren 14 und 15 das Trägersegment 14b als Zahnradsegment ausgebildet. Wie insbesondere aus der Figur 15 ersichtlich ist, ist das Zahnradsegment 45 an die Trägerscheibe 14b angespritzt, wobei das Zahnradsegment 45 auch den Permanentmagneten 15 mit umgibt. Mit Hilfe des aus nicht magnetisch leitendem Material hergestellten Zahnradsegments kann gleichzeitig eine Antriebskraft auf die Trägerplatte eingeleitet werden. Dadurch ist eine Integrierung in einen Antrieb und somit eine sehr kompakte Bauweise möglich.

Anhand der Figuren 16 bis 27 wird ein Ausführungsbeispiel der Erfindung zur Verschiebung der Kennlinie im Offsetpunkt beschrieben. Bei anderen Vorrichtungen entsprechend dem Stand der Technik wird diese Verschiebung mit Hilfe einer elektronischen Schaltungsanordnung bewirkt, die aber aufwendig und teuer ist. Der Aufbau der Meßeinrichtung entspricht weitgehend den oben beschriebenen Beispielen. Die in den Figuren 10 bis 15 dargestellten Variationen können auch hier mit sinngemäßen Änderungen angepaßt werden. Während bei diesen Beispielen der Fortsatz 19 die Achse 12 umgreift und so der magnetische Fluß vom Segment 17 zum Segment 16 gesteuert wird, weist das Segment 16a in der Figur 17 jetzt einen Spalt 60 auf, der kreisförmig im Bereich der Achse verläuft und somit einen Ausschnitt im Segment 16a darstellt. Dieser Spalt 60 kann ein Luftspalt sein oder mit einem anderen magnetisch nicht leitenden Material ausgefüllt sein, wie es auch beim oben beschriebenen Spalt 22 der Fall ist. Wie in der Figur 11 dargestellt, sind bzw. können die Segmente 17 und 16a im Deckel eines Sensors fixiert sein.

Das Verhältnis der beiden Spalte 22 und 60 zueinander ist für die Verschiebung der Kennlinie im Offset verantwortlich. In der Figur 20 ist nun der Verlauf der Kennlinie 62 der magnetischen Induktion B im Element 25, zum Beispiel einem Hall-Element, über dem Drehwinkel a der Achse 11 dargestellt. Zum Vergleich mit der Ausbildung ohne Spalt 60 nach den Beispielen nach der Figur 1 bis 7 ist die Kennlinie 63 eingezeichnet. Sie würde den Verlauf der Induktion B über den Drehwinkel α bei einer Ausbildung nach den Figuren 1 bis 15 darstellen. Bei der Darstellung in den Figuren 16 und 17 bei einem Drehwinkel α von Null Grad erhält man aufgrund des Spalts 60 einen negativen Wert für die Induktion B, während man bei maximalem Drehwinkel auch den maximalen Induktionswert Bₘₐₓ erhält. Es ist aus Figur 20 erkennbar, daß die beiden Kennlinien 62 und 63 parallel zueinander verlaufen. Sie sind nur um den Offsetbetrag X zueinander verschoben. Durch das Verhältnis der beiden Spalte 22 und 60 zueinander kann nun der Offset X der Kennlinien 62 und 63 um die gewünschte Position verschoben werden. Je kleiner der Spalt 60 im Verhältnis zum Spalt 22 ist, umso größer ist die Offsetverschiebung der Kennlinie 62. Durch Abstimmung der Spalte 60 und 22 zueinander bzw. durch Einstellung des Verhältnisses Spalt 60/Spalt 22 kann die Kennlinie 62 im Offset verschoben werden.

In den Figuren 21 bis 27 ist nun zur Verdeutlichung ein Ausführungsbeispiel dargestellt, bei dem die Spalte 60 und der Spalt 22 gleich groß sind und somit das Verhältnis 1 beträgt. In der Ausgangsstellung bei einem Drehwinkel α = 0 erfolgt eine maximale negative Induktion B₁. Aus der Figur 22 ist ersichtlich, daß bei dieser Ausgangsstellung Drehwinkel α = 0 der Permanentmagnet 15 nicht mit dem Element 25 überlappt. Hingegen bei einem maximalen Drehwinkel αₘₐₓ erhält man die maximale positive Induktion B₂. Hierbei überlappt, wie der Figur 26 zu entnehmen ist, der Permanentmagnet wiederum nicht mit dem Element 25. Die Vorrichtung ist nun so justiert, daß bei einem Drehwinkel αₘₐₓ/2 die Induktion B gleich Null ist. Wie aus den Figuren 23 und 24 zu entnehmen ist, befindet sich in dieser Stellung der Permanentmagnet mittig über dem Element 25.

## Patentansprüche

1. Messvorrichtung zur berührungslosen Erfassung eines Drehwinkels (α) zwischen einem Stator (16a, 17) und einem Rotor (14), wobei auf dem Rotor (14) ein Permanentmagnet (15) angeordnet ist, wobei sich zwischen Stator (16a, 17) und Rotor (14) ein Luftspalt befindet und der Stator aus mindestens zwei Segmenten (16a, 17) besteht, die durch mindestens einen magnetisch nicht leitenden Spalt (21, 22, 60) getrennt sind, wobei sich in mindestens einem ersten Spalt (21) mindestens ein magnetfeldempfindliches Element (25) befindet, wobei mindestens ein erstes Segment (17) des Stators keine magnetisch leitende Verbindung mit dem Rotor (14) aufweist, **dadurch gekennzeichnet, dass** die Achse (11) des Rotors (14) mindestens einen Bereich aus magnetisch leitendem Material aufweist, der mindestens vom Rotor (14) zu einem zweiten Segment (16a) des Stators, das eine magnetisch leitende Verbindung mit dem Rotor (14) aufweist, verläuft und dass mindestens ein anderer Spalt (22) zwischen den beiden Segmenten (16a, 17) des Stators vorhanden ist, der in dem ersten Segment (17) des Stators aufgebildet ist und so angeordnet ist, dass er den Magnetfluss des Permanentmagneten (15) behindert und so steuert, dass er über mindestens einen der ersten Spalte (21) verläuft, und dass im zweiten Segment (16a) des Stators ein zweiter Spalt (60) vorhanden ist, wobei der andere Spalt (22) und der zweite Spalt (60) so angeordnet sind, dass das Verhältnis der Breiten des anderen Spalts (22) und des zweiten Spalts (60) so abgestimmt ist, dass sich eine Offsetverschiebung (x) der Kennlinie (62, 63) der Messvorrichtung ergibt, und wobei der andere Spalt (22) und der zweite Spalte (60) die Achse (11) des Rotors (14) wenigstens teilweise umgreifen.

2. Meßvorrichtung nach Anspruch 1, **dadurch gekennzeichnet, daß** der andere Spalt (22) größer als der erste Spalt (21) ist.

3. Meßvorrichtung nach Anspruch 1 und/oder 2, **dadurch gekennzeichnet, daß** der andere und der zweite Spalt (22, 60) die Achse (11) des Rotors (14) umgreifen.

4. Meßvorrichtung nach einem der Ansprüche 1 bis 3, **dadurch gekennzeichnet, daß** der Rotor und der Stator scheibenförmig ausgebildet sind.

5. Meßvorrichtung nach einem der Ansprüche 1 bis 4, **dadurch gekennzeichnet, daß** der Rotor als Segment ausgebildet ist.

6. Meßvorrichtung nach einem der Ansprüche 1 bis 5, **dadurch gekennzeichnet, daß** zwei erste Spalte (21) vorhanden sind, in denen jeweils mindestens ein Hall-Element (25) angeordnet ist.

7. Meßvorrichtung nach einem der Ansprüche 1 bis 6, **dadurch gekennzeichnet, daß** die Achse (11) und der Rotor (14) einteilig ausgebildet sind.

8. Drosselklappensensor oder Pedalwertgeber mit einer Meßvorrichtung nach einem der Ansprüche 1 bis 7, **dadurch gekennzeichnet, daß** der als Stator (16a, 17) dienende Teil im Deckel (31) des Sensors (30) integriert ist, und daß der Deckel (31) aus Kunststoff besteht.

9. Drosselklappensensor oder Pedalwertgeber mit einer Meßvorrichtung nach einem der Ansprüche 1 bis 7, **dadurch gekennzeichnet, daß** der als Stator (16a, 17) dienende Teil im Boden (40) des Sensors (30) integriert ist, und daß der Boden (40) aus Kunststoff besteht.

## Claims

1. Measuring apparatus for non-contacting detection of a rotation angle (α) between a stator (16a, 17) and a rotor (14), with a permanent magnet (15) being arranged on the rotor (14), with an air gap being located between the stator (16a, 17) and the rotor (14), and the stator comprising at least two segments (16a, 17) which are separated by at least one magnetically impermeable gap (21, 22, 60), with at least one element (25) which is sensitive to magnetic fields being located in at least one first gap (21), with at least one first segment (17) of the stator not having any magnetically permeable connection to the rotor (14), **characterized in that** the shaft (11) of the rotor (14) has at least one region which is composed of magnetically permeable material and runs at least from the rotor (14) to a second segment (16a) of the stator which has a magnetically permeable connection to the rotor (14), and **in that** there is at least one other gap (22) between the two segments (16a, 17) of the stator, this gap being formed in the first segment (17) of the stator and arranged such that it impedes the magnetic flux of the permanent magnet (15) and controls it such that it runs via at least one of the first gaps (21), and **in that** there is a second gap (60) in the second segment (16a) of the stator, with the other gap (22) and the second gap (60) being arranged such that the ratio of the widths of the other gap (22) and of the second gap (60) is adapted such that an offset shift (x) of the characteristic curve (62, 63) of the measuring apparatus is produced, and with the other gap (22) and the second gap (60) at least partially surrounding the shaft (11) of the rotor (14).

2. Measuring apparatus according to Claim 1, **characterized in that** the other gap (22) is larger than the first gap (21).

3. Measuring apparatus according to Claim 1 and/or 2, **characterized in that** the other gap (22) and the second gap (60) surround the shaft (11) of the rotor (14).

4. Measuring apparatus according to one of Claims 1 to 3, **characterized in that** the rotor and the stator are in the form of discs.

5. Measuring apparatus according to one of Claims 1 to 4, **characterized in that** the rotor is in the form of a segment.

6. Measuring apparatus according to one of Claims 1 to 5, **characterized in that** there are two first gaps (21) which each contain at least one Hall element (25).

7. Measuring apparatus according to one of Claims 1 to 6, **characterized in that** the shaft (11) and the rotor (14) are integral.

8. Throttle valve sensor or pedal position sensor having a measuring apparatus according to one of Claims 1 to 7, **characterized in that** the part which serves as the stator (16a, 17) is integrated in the cover (31) of the sensor (30), and **in that** the cover (31) is composed of plastic.

9. Throttle valve sensor or pedal position sensor having a measuring apparatus according to one of Claims 1 to 7, **characterized in that** the part which serves as the stator (16a, 17) is integrated in the base (40) of the sensor (30), and **in that** the base (40) is composed of plastic.

## Revendications

1. Dispositif de mesure sans contact d'un angle de rotation (α) entre un stator (16a,17) et un rotor (14), avec un aimant permanent (15) sur le rotor (14), un entrefer entre le stator (16a,17) et le rotor (14), et le stator étant constitués d'au moins deux segments (16a,17) séparés par au moins un entrefer (21, 22, 60) magnétiquement non conducteur, avec un élément sensible au champ magnétique (25) situé dans au moins un premier entrefer (21), et au moins un premier segment (17) du stator ne présentant pas de raccordement magnétiquement conducteur avec le rotor (14),
**caractérisé en ce que**
l'axe (11) du rotor (14) présente au moins une partie en matériau magnétiquement conducteur qui s'étend au moins du rotor (14) à un deuxième segment (16a) du stator relié magnétiquement conducteur avec le rotor (14), et au moins un autre entrefer (22) entre les deux segments (16a, 17) du stator est formé dans le premier segment (17) du stator, et disposé de telle sorte qu'il empêche le flux magnétique de l'aimant permanent (15) et le dirige de telle sorte qu'il passe au-dessus d'au moins l'un du premier entrefer (21), et dans le deuxième segment (16a) du stator, un deuxième entrefer (60) est présent, l'autre entrefer (22) et le deuxième entrefer (60) étant disposés pour adapter le rapport des largeurs de l'autre entrefer (22) et du deuxième entrefer (60) de façon à créer un décalage offset (x) de la courbe caractéristique (62, 63) du dispositif de mesure, l'autre entrefer (22) et le deuxième entrefer (60) enveloppant l'axe (11) du rotor (14) au moins partiellement.

2. Dispositif de mesure selon la revendication 1,
**caractérisé en ce que**
l'autre entrefer (22) est plus grand que le premier entrefer (21).

3. Dispositif de mesure selon la revendication 1 et/ou 2,
**caractérisé en ce que**
l'autre et le deuxième entrefer (22, 60) enveloppent l'axe (11) du rotor (14).

4. Dispositif de mesure selon l'une des revendications 1 à 3,
**caractérisé en ce que**
le rotor et le stator sont en forme de disque.

5. Dispositif de mesure selon l'une des revendications 1 à 4,
**caractérisé en ce que**
le rotor est un segment.

6. Dispositif de mesure selon l'une des revendications 1 à 5,
**caractérisé en ce que**
deux premiers entrefers (21) logent chacun au moins un élément de Hall (25).

7. Dispositif de mesure selon l'une des revendications 1 à 6,
**caractérisé en ce que**
l'axe (11) et le rotor (14) sont d'une seule pièce.

8. Capteur de volet d'étranglement ou capteur de course de pédale d'accélérateur avec dispositif de mesure selon l'une des revendications 1 à 7,
**caractérisé en ce que**
la pièce servant de stator (16a, 17) est intégrée au couvercle (31) du capteur (30), et le couvercle (31) est en matière plastique.

9. Capteur de volet d'étranglement ou de course de pédale d'accélérateur avec dispositif de mesure selon l'une des revendications 1 à 7,
**caractérisé en ce que**
la pièce servant de stator (16a, 17) est intégrée au fond (40) du capteur (30) et le fond (40) est en matière plastique.
